# EUROPEAN PATENT APPLICATION

(11) **EP 2 631 066 A1**
(43) Date of publication of application: **28.08.2013**
(21) Application number: 10858690.0
(22) Date of filing: 22.10.2010
(51) Int. Cl.: B32B 27/12, B32B 38/04, B32B 27/32, B32B 27/18, B60R 13/00

(54) **MULTILAYER STRUCTURE FOR A VEHICLE INTERIOR MATERIAL, AND METHOD FOR MANUFACTURING SAME**

(71) Applicant: HAN IL E HWA Co., Ltd., Seoul 152-831 (KR)
(72) Inventor: KIM, Dong Won, Asan-si Chungcheongnam-do 336-882 (KR); KIM, Ki Sung, Asan-si Chungcheongnam-do 336-882 (KR)
(74) Representative: Fiesser, Gerold Michael
(86) International application number: PCT/KR2010/007261
(87) International publication number: WO 2012/053682

(57) **Abstract**

Disclosed are a multilayer structure for a vehicle interior material, and a method for manufacturing same. A multilayer structure for a vehicle interior material according to one embodiment of the present invention comprises: a polypropylene foam sheet; a reinforcement sheet stacked on at least one surface of the polypropylene foam sheet, wherein the reinforcement sheet includes a natural fiber and a synthetic fiber and is produced by being needle-punched and then subjected to a heat roller process; and a coating layer formed on the outer surface of the reinforcement sheet.

## Description

### [Technical Field]

The present invention relates to a multilayer structure, and more particularly, to a multilayer structure for vehicle interior material.

### [Background Art]

Vehicle interior materials are major components that enhance the comfort when passengers ride in a car, and in general, resins, fibers, and the like, which have a soft image, are usually used.

These vehicle interior materials have a relatively wide use range, which is applied to the automobile, and a complex structure, and thus shape stability (or dimensional stability) of the material is essentially needed. That is, it is required that shape deformation and delamination do not occur even under an external environment such as various temperatures, humidity, and the like.

Further, as environmentally friendly demand has increased recently, lightweight materials, which has excellent heat resistance and rigidity and may increase energy efficiency, are needed.

In general, a structure for vehicle interior material is composed of a structure in which a core material layer for maintaining shape and mountability, a reinforcement layer for imparting design, sound absorption and cushion, and an outer surface layer are stacked.

Meanwhile, in relation to a reinforcement layer, when a reinforcement layer (reinforcement sheet) is manufactured by only a method using a needle punching of a natural fiber and a synthetic fiber in the related art, the surface tension thereof is so weak that there is a problem in that it is difficult to satisfy flexural strength and flexural modulus, which are required for vehicle interior materials.

Further, when a method of adhering the reinforcement layer to both surfaces of a foam body is performed by only a needle punching, there is a problem in that applicability is limited because the foam body is damaged by the needle, and physical properties deteriorate due to the decrease in density of the reinforcement layer.

Therefore, a method capable of solving the above-described problems has been searched.

### [Disclosure]

### [Technical Problem]

Exemplary embodiments of the present invention have been made to provide a multilayer structure for vehicle interior material having excellent flexural characteristics.

### [Technical Solution]

According to an aspect of the present invention, there is provided a multilayer structure for vehicle interior material including: a polypropylene foam sheet; a reinforcement sheet stacked on at least one surface of the polypropylene foam sheet, including a natural fiber and a synthetic fiber, and produced by being needle-punched and then subjected to a heat roller process; and a coating film formed on the outer side surface of the reinforcement sheet.

In addition, the multilayer structure for vehicle interior material may further include an outer surface layer stacked on the outer side surface of the coating film and formed in the form of a non-woven cloth made of a polyolefin-based or polyester-based material.

Furthermore, the polypropylene foam sheet may be constituted by mixing 20 to 50 parts by weight of a linear low-density polyethylene or elastomer with 50 to 80 parts by weight of polypropylene.

Further, the polypropylene foam sheet may have a forming magnitude of 3 to 40 times.

In addition, the polypropylene foam sheet may be formed by a single-layered or double-layered lamination.

Furthermore, the natural fiber and the synthetic fiber may be mixed at a ratio of 1:9 to 9:1 in the reinforcement sheet.

Further, the natural fiber and the synthetic fiber may have a length of 40 to 120 mm.

In addition, the reinforcement sheet may have a density of 0.3 to 1.0 g/cm³.

Furthermore, the natural fiber may be at least one of jute, kenaf, sisal, and bamboo.

Further, the synthetic fiber may be at least one of a low-melting point polyester, polyethylene terephthalate (PET), polypropylene, and a biodegradable resin fiber.

In addition, the biodegradable resin fiber may be polyactic acid (PLA) or cellulose acetate (CA).

Furthermore, the coating film may be formed of a UV curable resin or a thermally curable biogel.

Further, the UV curable resin includes a photoinitiator, a photopolymerizable oligomer, a photopolymerizable monomer, and an additive, and the photopolymerizable oligomer may be at least one of a one-pack type urethane acrylic oligomer, a two-pack type urethane acrylic oligomer, a polyester acrylic oligomer, and a mixed type acrylic oligomer.

According to another aspect of the present invention, provided is a method for manufacturing a multilayer structure for vehicle interior material, the method including: a first step of forming a polypropylene foam sheet; a second step of producing a reinforcement sheet by including a natural fiber and a synthetic fiber, being needle-punched, and then subjected to a heat roller process; a third step of forming a coating film on the outer side surface of the reinforcement sheet; and a fourth step of stacking the reinforcement sheet on at least one surface of the polypropylene foam sheet.

In addition, the method may further include, after the fourth step, a fifth step of stacking an outer surface layer in the form of a non-woven cloth made of a polyolefin-based or polyester-based material on the outer side surface of the coating film.

Furthermore, the third step may be a step of forming the coating film by coating a UV curable resin on the outer side surface of the reinforcement sheet and irradiating UV rays thereon.

Further, the third step may be a step of forming the coating film by coating a thermally curable biogel on the outer side surface of the reinforcement sheet and adding heat thereto to cure the biogel.

In addition, the second step and the third step may be performed by a continuous process.

### [Advantageous Effects]

Exemplary embodiments of the present invention have an effect of improving flexural characteristics by forming a coating film using a UV curable resin or a thermally curable biogel on a reinforcement sheet in a multilayer structure for vehicle interior material.

Furthermore, exemplary embodiments of the present invention have an effect of preventing deterioration in physical properties due to the reduction in density of the reinforcement sheet by manufacturing the reinforcement sheet by needle-punching the natural fiber and the synthetic fiber, and then using a heat roller.

### [Description of Drawings]

FIG. 1 is a cross-sectional view of a multilayer structure for vehicle interior material according to an exemplary embodiment of the present invention.
FIG. 2 is a flowchart of a method for manufacturing a multilayer structure for vehicle interior material according to an exemplary embodiment of the present invention.
FIG. 3 is a flowchart of a method for forming a coating film of FIG. 2.

### <Description of Main Reference Numerals of Drawings>

- 100: Multilayer structure for vehicle interior material
- 120: Polypropylene foam sheet
- 140: Reinforcement sheet
- 160: Coating film

### [Best Mode]

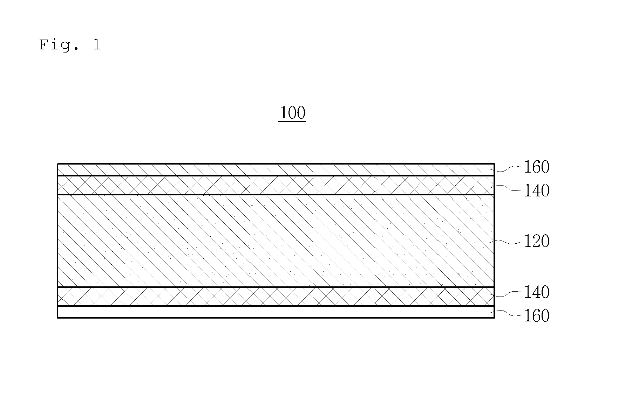

FIG. 1 is a cross-sectional view of a multilayer structure 100 for vehicle interior material according to an exemplary embodiment of the present invention.

Referring to FIG. 1, the multilayer structure 100 for vehicle interior material includes a polypropylene foam sheet 120, a reinforcement sheet 140 stacked on one surface or both surfaces of the polypropylene foam sheet 120, and a coating film 160 formed on the outer side surface of the reinforcement sheet 140.

The polypropylene foam sheet 120 is a foam sheet including polypropylene, which is a kind of polyolefin-based material, as a major component. The polypropylene is composed of constituent molecules which are only hydrocarbons and thus has no polarity and is highly hydrophobic, and as a result, has high resistance to polar contaminants.

The polypropylene foam sheet 120 may be constituted by mixing, for example, 20 to 50 parts by weight of a linear low-density polyethylene or elastomer with 50 to 80 parts by weight of polypropylene.

The polypropylene foam sheet 120 may have a forming magnitude of 3 to 40 time. When the forming magnitude of the polypropylene foam sheet 120 is less than 3 times the original size thereof, there is a problem in that the forming magnitude fails to affect the improvement in sound absorption, and the foam sheet has a relatively high weight. Further, when the forming magnitude of the polypropylene foam sheet 120 exceeds 40 times, there is a problem in that strength and shape stability are reduced.

The size of the polypropylene foam sheet 120 is not limited. For example, the polypropylene foam sheet 120 may be formed to have a width of 300 mm to 2,000 mm and a thickness of 1 mm to 15 mm.

In addition, it is also possible to form the polypropylene foam sheet 120 by a single-layered or double-layered lamination. For example, the polypropylene foam sheet 120 may be manufactured to have a width of 1,000 mm to 1,700 mm and a thickness of 3 mm to 5 mm, and then may be subjected to a double-layered lamination.

When the polypropylene foam sheet 120 is subjected to a double-layered lamination, there is an effect in that shape stability has been improved.

The reinforcement sheet 140 is formed by being stacked on one surface or both surfaces of the polypropylene foam sheet 120. The reinforcement sheet 140 serves to increase absorption to external impact exerted on an vehicle interior material and reinforce strength and shape stability.

The reinforcement sheet 140 includes a natural fiber and a synthetic fiber. The natural fiber and the synthetic fiber serve to improve durability, water resistance, corrosion resistance, and strength of the reinforcement sheet 140.

The blending ratio of the natural fiber and the synthetic fiber in the reinforcement sheet 140 is not limited. For example, the natural fiber and the synthetic fiber may be mixed at a ratio of 1:9 to 9:1 in the reinforcement sheet 140.

Furthermore, the thickness of the reinforcement sheet 140 is not limited. For example, the reinforcement sheet 140 may be manufactured as a thin film sheet having a thickness of 0.5 mm to 1 mm.

Furthermore, the reinforcement sheet 140 may have a density of 0.3 to 1.0 g/cm³. It is also possible to have a density other than the above-described density, but when the density of the reinforcement sheet 140 is less than 0.3 g/cm³, there is a problem in that rigidity is somewhat weak. Conversely, when the density of the reinforcement sheet 140 exceeds 1.0 g/cm³, there is a problem in that it is difficult to manufacture a lightweight reinforcement sheet.

Meanwhile, at least one of the type and size of the natural fiber is not limited. For example, the natural fiber may be at least one of jute, kenaf, sisal, and bamboo. Meanwhile, the natural fiber may have a thickness of 40 µm to 120 µm and a length of 40 mm to 80 mm.

The length of the natural fiber and the synthetic fiber in the reinforcement sheet 140 may be 40 to 120 mm. When the length of the natural fiber and the synthetic fiber is 40 mm or less, respectively, there is a problem in that physical properties and surface tension of the reinforcement sheet 140 are reduced. On the other hand, when the length of the natural fiber and the synthetic fiber is 120 mm or more, each fiber may be entangled in a carding process for manufacturing the reinforcement sheet 140, and a phenomenon in which the natural fiber snaps occurs when an vehicle interior material is formed, and thus there is a problem in that the flexural strength and flexural modulus of the vehicle interior material are decreased.

The synthetic fiber may be at least one of a low-melting point polyester, polyethylene terephthalate (PET), polypropylene, and a biodegradable resin fiber.

Here, the biodegradable resin fiber refers to a fiber which is degraded by enzymes secreted by microorganisms. The kind of biodegradable resin fiber is not limited. For example, the biodegradable resin fiber may be polyactic acid (PLA) or cellulose acetate (CA).

The coating film 160 is formed on the outer side surface of the reinforcement sheet 140 and thus serves to improve the flexural characteristics of the reinforcement sheet 140.

The coating film 160 may be formed of a UV curable resin or a thermally curable biogel.

The UV curable resin refers to a resin that is cured by being irradiated with light of ultraviolet rays (200 nm to 400 nm). The UV curable resin includes a photoinitiator, a photopolymerizable oligomer, a photopolymerizable monomer, and an additive. Meanwhile, the photopolymerizable oligomer may be at least one of a one-pack type urethane acrylic oligomer, a two-pack type urethane acrylic oligomer, an epoxy acrylic oligomer, a polyester acrylic oligomer, and an acrylic oligomer.

The thermally curable biogel (bioresin) refers to a material which is based on bio (animals or plants) and cured by heat. As the thermally curable biogel, a well-known material may be used, and thus detailed description thereof will be omitted herein.

The multilayer structure 100 for vehicle interior material may further include an outer surface layer 180 stacked on the outer side surface of the coating film 160. The outer surface layer 180 may be manufactured in the form of a non-woven cloth made of a polyolefin-based or polyester-based material.

When the outer surface layer 180 is manufactured in the form of a non-woven cloth, the outer surface layer 180 may be thermally adhered to the coating film 160 without using a solvent-type adhesive or a hot-melt type adhesive, and thus there is an advantage in that the process is simplified. Further, since there is no need to use an adhesive, there is an advantage in that an offensive odor problem caused by an adhesive does not occur.

Hereinafter, a method for manufacturing the multilayer structure 100 for vehicle interior material according to an exemplary embodiment of the present invention will be described. Like reference numerals denote like members. Meanwhile, the configurations of the polypropylene foam sheet 120, the reinforcement sheet 140, the coating film 160, and the outer surface layer 180 are the same as described above, and thus only a manufacturing method thereof will be described below for convenience of explanation.

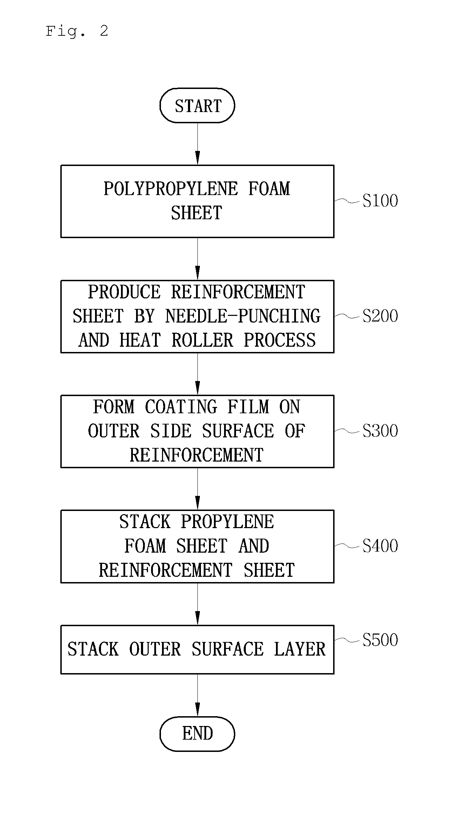

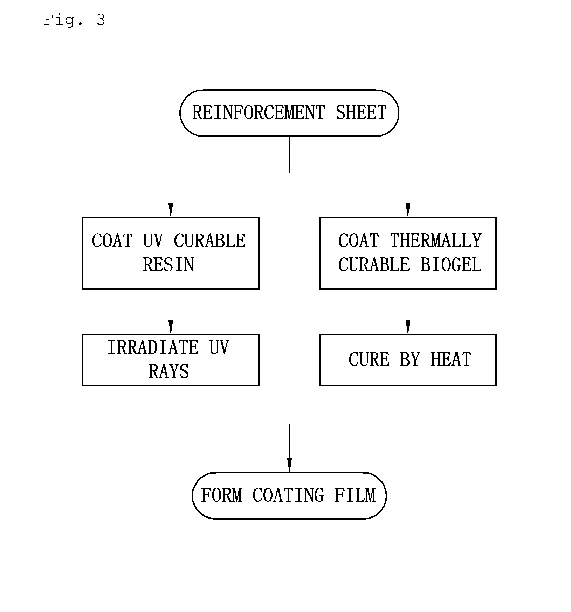

FIG. 2 is a flowchart of the method for manufacturing the multilayer structure 100 for vehicle interior material according to an exemplary embodiment of the present invention. FIG. 3 is a flowchart of the method for forming the coating film of FIG. 2.

Referring to FIGS. 2 and 3, in the method for manufacturing the multilayer structure for vehicle interior material, the polypropylene foam sheet 120 is first formed. The polypropylene foam sheet 120 may be formed by a typical method. For example, the polypropylene foam sheet 120 may be extruded in the form of a sheet having a predetermined thickness through an extrusion forming apparatus by mixing a polypropylene resin or two resins including a polypropylene resin, and mixing an additive such as a co-crosslinking agent, a foaming agent, and the like with the mixture.

In addition, a continuous-phase foam sheet may be formed by irradiating electron beam on the sheet and passing the sheet on which the electron beam is irradiated through a heat oven. Furthermore, it is also possible to form a polypropylene foam sheet by directly conducting an extrusion foaming process in an extruder die (step S100 up to now).

Subsequently, the reinforcement sheet 140 is manufactured. The reinforcement sheet 140 may be manufactured in the form of a thin film sheet by mixing a natural fiber and a synthetic fiber by a needle punching method, and subjecting the mixture to a heat roller process. Meanwhile, the synthetic fiber is a synthetic fiber which may be molten by the heat roller temperature in the heat roller process. Examples of the synthetic fiber are the same as those described above.

When the reinforcement sheet 140 is manufactured using only a needle-punching method, the surface tension becomes weak, and thus there is a problem in that it is difficult to satisfy flexural characteristics. Therefore, the above-described problem may be solved by manufacturing the reinforcement sheet 140 by being needle-punched, and then subjected to a heat roller process (step S200 up to now).

Subsequently, the coating film 160 is formed on the outer side surface of the reinforcement sheet 140. The coating film 160 may be formed of a UV curable resin or a thermally curable biogel.

When the coating film 160 is formed using the UV curable resin, the coating film 160 may be formed by coating the UV curable resin on the outer side surface of the reinforcement sheet 140, and irradiating UV rays thereon.

For example, the coating film 160 may be formed by coating a urethane acrylic UV curable resin to a thickness of 5 to 30 µm on the outer side surface of the reinforcement sheet 140, and irradiating UV rays at 800 to 1,200 mJ/cm² (50 to 60°C) thereon to cure the resin.

When the coating film 160 is formed using the thermally curable biogel, the coating film 160 may be formed by coating the thermally curable biogel on the outer side surface of the reinforcement sheet 140, and adding heat thereto to cure the biogel.

Further, it is also possible to manufacture the reinforcement sheet 140 on which the coating film 160 is formed through a continuous process. For example, it is possible to continuously manufacture the reinforcement sheet 140 by allowing the step of manufacturing the reinforcement sheet 140 to include a needle punching process, a heat roller process, a UV curable resin coating process, and a UV ray irradiating process. In addition, it is also possible to allow the step of manufacturing the reinforcement sheet 140 to include a needle punching process, a heat roller process, a biogel coating process, and a thermal curing process (step S300 up to now).

Subsequently, the reinforcement sheet 140 on which the coating film 160 is formed is stacked on at least one surface of the polypropylene foam sheet 120. The stacking method enables the polypropylene foam sheet 120 and the reinforcement sheet 140 to be continuously laminated by heat. Furthermore, it is also possible to conduct lamination with the reinforcement sheet 140 by manufacturing the polypropylene foam sheet 120 into two sides.

Meanwhile, when the polypropylene foam sheet 120 and the reinforcement sheet 140 are subjected to lamination by heat, it is also possible to conduct lamination by preheating the polypropylene foam sheet 120 and the reinforcement sheet 140 at different temperatures. In this case, it is possible to suppress a wrinkle and overlapping phenomenon which may occur after the lamination (step S400 up to now).

The method for manufacturing the multilayer structure for vehicle interior material may further include a step of stacking the outer surface layer 180 in the form of a non-woven cloth made of a polyolefin-based or polyester-based material on the outer side surface of the coating film 160. The outer surface layer 180 may be stacked on the coating film 160 by a melt adhesion method by heat (step S500 up to now).

As described above, exemplary embodiments of the present invention may improve flexural characteristics by forming a coating film using a UV curable resin or a thermally curable biogel on a reinforcement sheet in a multilayer structure for vehicle interior material.

Furthermore, exemplary embodiments of the present invention may prevent deterioration in physical properties due to the reduction in density of the reinforcement sheet by manufacturing the reinforcement sheet by needle-punching the natural fiber and the synthetic fiber, and then using a heat roller. As described above, exemplary embodiments of the present invention have been described, but it will be appreciated by those skilled in the art that the present invention may be modified and changed in various ways without departing from the spirit of the present invention described in the claims by the addition, change, deletion or addition of constituent elements, and that the modifications and changes are included in the scope of the present invention.

## Claims

1. A multilayer structure for a vehicle interior material comprising:
a polypropylene foam sheet;
a reinforcement sheet stacked on at least one surface of the polypropylene foam sheet, comprising a natural fiber and a synthetic fiber, and produced by being needle-punched and then subjected to a heat roller process; and
a coating film formed on an outer side surface of the reinforcement sheet.

2. The multilayer structure of claim 1, further comprising:
an outer surface layer stacked on the outer side surface of the coating film and formed in a form of a non-woven cloth made of a polyolefin-based or polyester-based material.

3. The multilayer structure of claim 1, wherein the polypropylene foam sheet has a forming magnitude of 3 to 40 times and is formed by a single-layered or double layered lamination.

4. The multilayer structure of claim 1, wherein the natural fiber and the synthetic fiber are mixed at a ratio of 1:9 to 9:1 in the reinforcement sheet, wherein the reinforcement sheet has a density of 0.3 to 1.0 g/cm³.

5. The multilayer structure of claim 1, wherein the natural fiber and the synthetic fiber have a length of 40 to 120 mm.

6. The multilayer structure of claim 1 or 4, wherein the natural fiber is at least one of jute, kenaf, sisal, and bamboo.

7. The multilayer structure of claim 1 or 4, wherein the synthetic fiber is at least one of a low-melting point polyester, polyethylene terephthalate (PET), polypropylene, and a biodegradable resin fiber.

8. The multilayer structure of claim 1, wherein the coating film is formed of a UV curable resin or a thermally curable biogel.

9. The multilayer structure of claim 8, wherein the UV curable resin comprises a photoinitiator, a photopolymerizable oligomer, a photopolymerizable monomer, and an additive, and the photopolymerizable oligomer is at least one of a one-pack type urethane acrylic oligomer, a two-pack type urethane acrylic oligomer, an epoxy acrylic oligomer, a polyester acrylic oligomer, or a mixed type acrylic oligomer.

10. A method for manufacturing a multilayer structure for vehicle interior material, the method comprising:
a first step of forming a polypropylene foam sheet;
a second step of producing a reinforcement sheet by comprising a natural fiber and a synthetic fiber, being needle-punched, and then subjected to a heat roller process;
a third step of forming a coating film on an outer side surface of the reinforcement sheet; and
a fourth step of stacking the reinforcement sheet on at least one surface of the polypropylene foam sheet.

11. The method of claim 14, further comprising:
after the fourth step, a fifth step of stacking an outer surface layer in a form of a non-woven cloth made of a polyolefin-based or polyester-based material on the outer side surface of the coating film.

12. The method of claim 10, wherein the natural fiber and the synthetic fiber are mixed at a ratio of 1:9 to 9:1 in the reinforcement sheet, wherein the reinforcement sheet has a density of 0.3 to 1.0 g/cm³.

13. The method of claim 10 or 12, wherein the natural fiber is at least one of jute, kenaf, sisal, and bamboo.

14. The method of claim 10 or 12, wherein the synthetic fiber is at least one of a low-melting point polyester, polyethylene terephthalate (PET), polypropylene, and a biodegradable resin fiber.

15. The method of claim 10, wherein the third step is a step of forming the coating film by coating a UV curable resin on the outer side surface of the reinforcement sheet and irradiating UV rays thereon.

16. The method of claim 10, wherein the third step is a step of forming the coating film by coating a thermally curable biogel on the outer side surface of the reinforcement sheet and adding heat thereto to cure the biogel.

17. The method of claim 15 or 16, wherein the second step and the third step are performed by a continuous process.
